# EUROPEAN PATENT SPECIFICATION

(11) **EP 3 435 393 B1**
(45) Date of publication and mention of the grant of the patent: **02.09.2020**
(21) Application number: 17183377.5
(22) Date of filing: 26.07.2017
(51) Int. Cl.: H01H 1/38, H02B 11/167, H02B 11/127

(54) **SYSTEM FOR ALIGNMENT OF A CIRCUIT BREAKER TO A SWITCHGEAR**
SYSTEM ZUR AUSRICHTUNG EINES TRENNSCHALTERS AN EIN SCHALTGERÄT
SYSTÈME D'ALIGNEMENT D'UN DISJONCTEUR SUR UN APPAREILLAGE DE COMMUTATION

(43) Date of publication of application: 30.01.2019
(73) Proprietor: ABB Schweiz AG, 5400 Baden (CH)
(72) Inventor: BELLONI, Francesco, 24124 BERGAMO (IT); FARINA, Andrea, 20900 MONZA (IT)
(74) Representative: Gregorj S.r.l.

(56) References cited:
- EP-A1- 0 263 395
- CN-U- 202 602 149
- JP-U- S56 118 511
- US-A- 1 715 706

## Description

### BACKGROUND

### Technical field

The present invention relates to a circuit breaker having a system for the alignment of the circuit breaker itself to a switching device.

### Description of the Related Art

Draw-out circuit breakers are known in the art. Particularly in the medium voltage field (which commonly refers to voltages from 1 kV to some tens of kV), known circuit breakers comprise tulip-contact-assemblies for the mechanical and electrical connection of movable conducting terminals to stationary conducting terminals of a switchgear. The circuit breakers can in particular move along a connection/disconnection direction with respect to the switchgear, and, to this purpose, comprise a, preferably motorized, truck.

In order to ensure a correct alignment between the circuit breaker and the switchgear, one or more spacers are commonly used to be applied between the circuit breaker itself and the truck.

However, the use of spacers for reducing misalignments is a time-consuming and empiric process which is heavily based on the skills of the operator. Often, the process must be repeated several times before reaching a correct height and/or orientation of the circuit breaker.

A circuit breaker according to the preamble of claim 1 is disclosed in US 1,715,706 A.

### BRIEF SUMMARY OF THE INVENTION

The problem underlying the present invention is therefore to provide a system for the alignment of a circuit breaker to a switchgear, wherein the adjustment can be obtained in an easy manner without a big effort of the operator

This problem is solved by a circuit breaker according to the claim 1.

Dependent claims define possible advantageous embodiments of the invention.

### BRIEF DESCRIPTION OF THE DRAWINGS

Further characteristics and advantages of the invention will be more apparent from the following description of preferred embodiments and of their alternatives given as a way of an example with reference to the enclosed drawings in which:
Figures 1a and 1b are side views of a circuit breaker and a switchgear, respectively in a disconnected configuration and in a connected configuration;
Figure 2 is a perspective view of a switchgear according to a possible embodiment of the invention;
Figure 3 is another perspective, partially exploded, view of the switchgear in Figure 2;
Figure 4 is a perspective, exploded view of a particular of the switchgear in Figures 2 and 3;
Figures 5 a-c are side views of a pin of the switchgear in Figures 2-3.

### DETAILED DESCRIPTION OF THE INVENTION

In the following description, same alphanumeric references are used for analogous exemplary elements when they are depicted in different drawings.

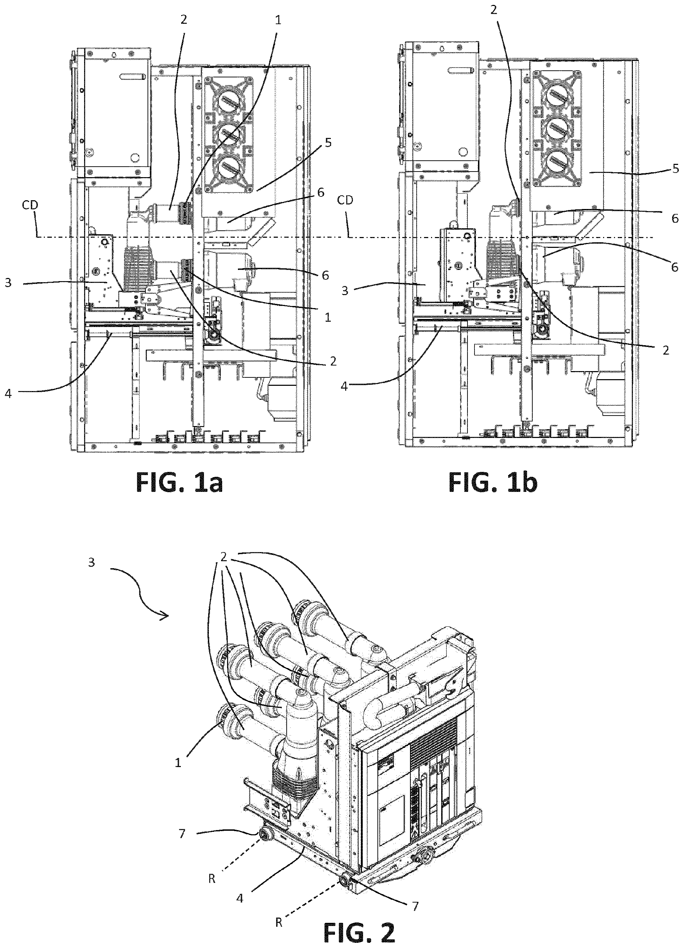

Referring to Figures 1a-1b, a switching device, such as a circuit breaker, is indicated with reference number 3, and a switchgear is indicated with reference number 5. The switching device 3 is in particular a draw-out circuit breaker which can be housed in the switchgear 5. The circuit breaker 3 is supported by a truck 4 that can move along a connection/disconnection direction CD from an extraction position with respect to the switchgear 5 (figure 1a), in which movable conducting terminals 2 of the circuit breaker 3 (such as contact-arms or conducting-bushings) are disconnected from corresponding stationary conducting terminals 6 of the switchgear 5 (such as stationary-conducting-pins), to an insertion position in the switchgear 5 (figure 1b), in which the movable conducting terminals 2 are connected to the corresponding stationary conducting terminals 6. The extraction position corresponds to a mechanical and electrical disconnection position, whilst the insertion position corresponds to a connection position.

In the embodiments shown in the Figures, the switchgear 5 and the circuit breaker 3 are of the multiphase-type, in particular of the three-phase type. Therefore, each of them comprises three couples of respective conducting terminals. However, as will be clear to the skilled person, according to a further possible embodiment, the switchgear 5 and the circuit breaker 3 can be of the one-phase type. In this case, each of the switchgear 5 and the circuit breaker 3 comprises a single couple of respective conducting terminals.

Contact-assemblies 1 can be fixed to each of the conducting terminals 2 mounted on and movable together with the circuit breaker 3 and are suitable to engage with the stationary conducting terminals 6 of the switchgear 5. However, in an alternative further possible embodiment (not shown in the Figures), the contact-assemblies 1 can also be assembled on the stationary conducting terminals 6 of the switchgear 5 in order to receive, and engage with, the movable conducting terminals 2 of the circuit breaker 3. According to the embodiments shown in the Figures, contact assemblies are preferably of the tulip type. However, the contact assemblies can be differently shaped. In particular, they can be gripper-shaped, for example for the connection of the gripper to a conducting bus bar instead of a cylindrical terminal.

The circuit breaker 3, in particular the truck 4, comprises a plurality of wheels 7 allowing the movements along the connection/disconnection direction CD. Each wheel 7 is rotatable along a rotation axis R which is transversal, particularly perpendicular, to the connection/disconnection direction CD. Preferably, all the rotation axes R of the wheels 7 are parallel.

The circuit breaker 3 comprises a system for moving the rotational axis R of each of the wheels 7. In this manner, by acting on the rotational axis R of each wheel, it is possible to vary the orientation/height of the circuit breaker 3 in order to align it to the switchgear 5.

Preferably, the system is configured such that the rotational axes R can be moved independently one to another.

According to a possible embodiment, the system is configured such that each rotational axis R is moved transversally with respect to the connection/disconnection direction CD while maintaining the same orientation relative to the latter.

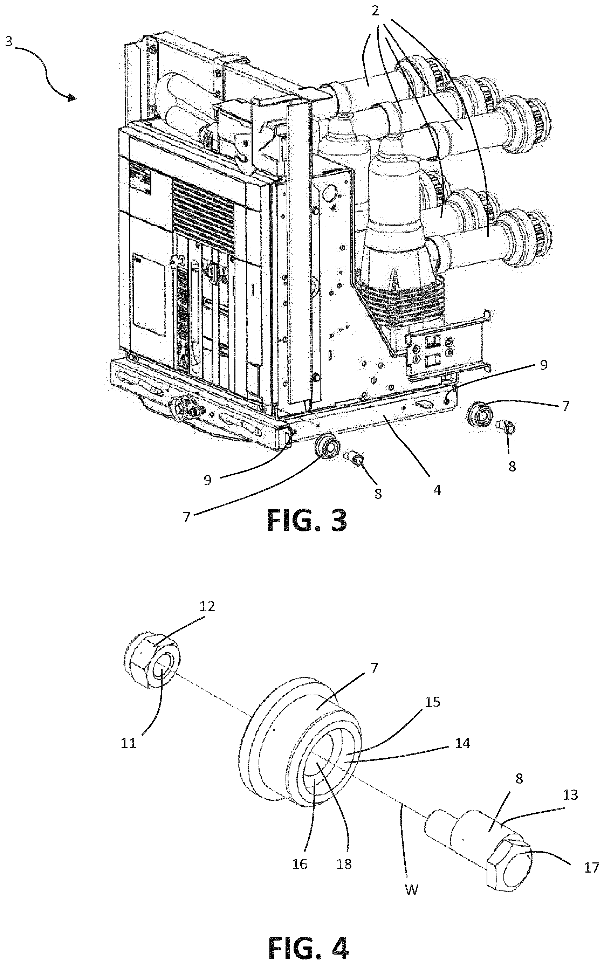

The system for moving the rotational axis R of the wheels 7 can be differently shaped and configured. With reference to Figures 3-5 possible embodiments of the system will be described.

According to a possible embodiment, each wheel 7 is connected, preferably in a removable manner, to the circuit breaker 3, in particular to the truck 4, through a pin 8. The pin 8 can be inserted in corresponding pin seats 9 of the truck 4. For example, the pin 8 can have a threaded portion 10 which can be screwed in a threaded seat 11 of a counter-nut 12.

The pin 8 extends along a pin axis P and is rotatable in the corresponding pin seat 9 around the same. The pin 8 and the pin seat 9 are configured such that when the pin 8 is in the pin seat 9, the pin axis P is transversal, in particular perpendicular, to the connection/disconnection direction CD.

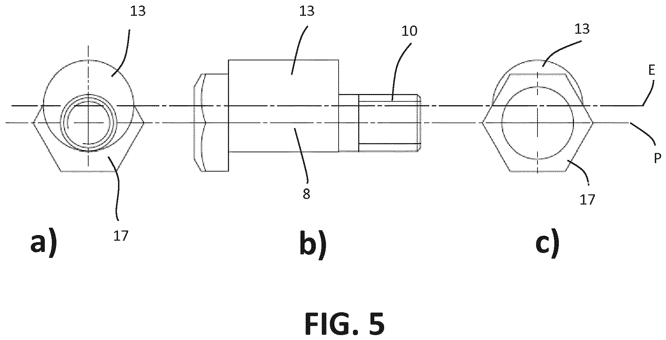

Advantageously, the pin 8 comprises an eccentric portion 13 which is eccentric with respect to the pin axis P. In other words, an eccentric portion 13 axis coincident with the pin axis P cannot be recognized. For example, according to the embodiment shown in Figures 5a-c, the eccentric portion 13 extends along an eccentric portion axis E which is parallel to and shifted with respect to the pin axis P. According to the embodiment shown, the eccentric portion 13 has a circular section. However, different cross sections of the eccentric portion are possible.

Advantageously, the eccentric portion 13 engages an engagement portion 14 of the wheel 7 so to act as a cam in said engagement portion 14. With reference to the embodiment shown in the Figures, the wheel 7 has a through hole 18 defining an inner, preferably extending circularly around a wheel axis W, wall 15. The pin eccentric portion 13 internally engages said wheel inner wall 15, which therefore forms the above-mentioned engagement portion 14.

As it is clear from the Figures, by rotating the pin around the pin axis P, the wheel inner wall 15 enters in contact with different points of the eccentric portion 13, each of whom lies at a different distance from the pin axis P. As a consequence, by doing so, the wheel axis W is lowered and raised relative to the pin axis P. As will be clear to the skilled person, by acting independently on each wheel 7 of the circuit breaker 3, it is possible not only to raise and lower the movable contacts, but also to modify their inclination with respect to the connection/disconnection direction CD and definitively with respect to the stationary contacts 6 of the switchgear 5. This result can be achieved manually or by means of an automating machine acting on the wheels.

Advantageously, the pin eccentric portion 13 also acts as an axial constraint for the wheel 7, forming an abutment for a radially internal wall 16 of the wheel.

Advantageously, the pin 8 comprises an actuation portion 17 allowing rotations of the pin 8 by means of a suitable external tool. For example, according to the embodiment shown in the Figures, the actuation portion 17 can be nut-shaped.

Of course, the system for moving the rotational axis R of the wheels 7 can be differently shaped and configured. For example, according to possible further embodiments, the system can comprise for example an endless screw system, a cylinder-piston system, or the like, each configured for moving the rotational axes R of the wheels 7 with respect to the circuit breaker.

From the above description, the skilled person can appreciate how the circuit breaker according to the invention can be easily aligned to the switchgear by acting on each of its wheels. This operation is fast, economic and can be easily repeated during the operational life of the circuit breaker, if necessary.

To the above-described embodiments, the skilled person, in order to meet specific current needs, can make several additions, modifications, or substitutions of elements with other operatively equivalent elements, without however departing from the scope of the appended claims.

## Claims

1. Draw-out circuit breaker (3) comprising a plurality of wheels (7) so to be movable along a connection/disconnection direction (CD) with respect to a switchgear (5) between a connection position, wherein the circuit breaker (3) is electrically and mechanically connected to the switchgear (5), and a disconnection position, wherein the circuit breaker (3) and the switchgear (5) are electrically and mechanically disconnected, wherein each wheel (7) is rotatable along a rotation axis (R) which is transversal to the connection/disconnection direction (CD), wherein it further comprises a system for moving the rotational axis (R) of each of said wheels (7), wherein said system comprises a plurality of pins (8), each inserted in a corresponding pin seat (9) of the circuit breaker (3), each of said pin (8) extending along a pin axis (P) and being rotatable in the corresponding pin seat (9) around the same, each of said pins (8) further comprising an eccentric portion (13) which is eccentric with respect to the pin axis (P), wherein each of said wheels (7) comprises an engagement portion (14) engaged by said eccentric portion (13) which acts as a cam in said engagement portion (14), wherein each of said pins (8) comprises an actuation portion (17) allowing rotations of the pin (8) by means of an external tool, **characterized in that** each of said pins (8) has a threaded portion (10) opposite to the actuation portion (17) screwed in a threaded seat (11) of a counter-nut (12), wherein the pin eccentric portion (13) acts as an axial constraint for the wheel (7), forming an abutment for a radially internal wall (16) of the wheel (7).

2. Draw-out circuit breaker (3) according to claim 1, wherein said system is configured such that the wheels (7) rotational axes (R) can be moved independently one to another.

3. Draw-out circuit breaker (3) according to claim 1 or 2, wherein said system is configured such that each wheel (7) rotational axis (R) is moved transversally with respect to the connection/disconnection direction (CD) while maintaining the same orientation relative to the latter.

4. Draw-out circuit breaker (3) according to any of the preceding claims, wherein the eccentric portion (13) extends along an eccentric portion axis (E) which is parallel to and shifted with respect to the pin axis (P).

5. Draw-out circuit breaker (3) according to claim 4, wherein the eccentric portion (13) has a circular section.

6. Draw-out circuit breaker (3) according to any of the preceding claims, wherein each of said wheels (7) has a through hole (18) defining an inner wall (15), wherein said pin eccentric portion (13) internally engages said wheel inner wall (15).

7. Draw-out circuit breaker (3) according to any of the preceding claims, wherein the wheels (7) rotation axes (R) are perpendicular to the connection/disconnection direction (CD).

8. Draw-out circuit breaker (3) according to any of the preceding claims, wherein the wheels (7) rotation axes (R) are parallel one to another.

9. Draw-out circuit breaker (3) according to any of the preceding claims, further comprising a truck (4) supporting the circuit breaker (3), wherein the wheels (7) are coupled to the truck (4).

## Patentansprüche

1. Herausziehbarer Leistungsschalter (3), umfassend eine Vielzahl von Rädern (7), um entlang einer Verbindungs-/Trennrichtung (CD) in Bezug auf eine Schaltanlage (5) zwischen einer Verbindungsposition, in der der Leistungsschalter (3) elektrisch und mechanisch mit der Schaltanlage (5) verbunden ist, und einer Trennposition, in der der Leistungsschalter (3) und die Schaltanlage (5) elektrisch und mechanisch getrennt sind, beweglich zu sein, wobei jedes Rad (7) entlang einer Drehachse (R) drehbar ist, die quer zur Verbindungs-/Trennrichtung (CD) verläuft, wobei er ferner ein System zum Bewegen der Drehachse (R) von jedem der Räder (7) umfasst, wobei das System eine Vielzahl von Stiften (8) umfasst, die jeweils in einem entsprechenden Stiftsitz (9) des Leistungsschalters (3) eingesetzt sind, wobei sich jeder der Stifte (8) entlang einer Stiftachse (P) erstreckt und in dem entsprechenden Stiftsitz (9) um denselben drehbar ist, wobei jeder der Stifte (8) ferner einen exzentrischen Abschnitt (13) umfasst, der in Bezug auf die Stiftachse (P) exzentrisch ist, wobei jedes der Räder (7) einen Eingriffsabschnitt (14) umfasst, der mit dem exzentrischen Abschnitt (13) in Eingriff steht, der als Nocken in dem Eingriffsabschnitt (14) wirkt, wobei jeder der Stifte (8) einen Betätigungsabschnitt (17) umfasst, der Drehungen des Stifts (8) mittels eines externen Werkzeugs ermöglicht, **dadurch gekennzeichnet, dass** jeder der Stifte (8) einen dem Betätigungsabschnitt (17) gegenüberliegenden Gewindeabschnitt (10) aufweist, der in einen Gewindesitz (11) einer Gegenmutter (12) eingeschraubt ist, wobei der exzentrische Abschnitt (13) des Stifts als axiale Beschränkung für das Rad (7) wirkt und ein Widerlager für eine radiale Innenwand (16) des Rads (7) bildet.

2. Herausziehbarer Leistungsschalter (3) nach Anspruch 1, wobei das System so konfiguriert ist, dass die Drehachsen (R) der Räder (7) unabhängig voneinander bewegt werden können.

3. Herausziehbarer Leistungsschalter (3) nach Anspruch 1 oder 2, wobei das System so konfiguriert ist, dass jede Drehachse (R) des Rades (7) in Bezug auf die Verbindungs-/Trennrichtung (CD) quer bewegt wird, während die gleiche Orientierung bezogen auf Letztere beibehalten wird.

4. Herausziehbarer Leistungsschalter (3) nach einem der vorhergehenden Ansprüche, wobei sich der exzentrische Abschnitt (13) entlang einer Achse (E) des exzentrischen Abschnitts erstreckt, die parallel zur Stiftachse (P) ist und in Bezug auf diese verschoben ist.

5. Herausziehbarer Leistungsschalter (3) nach Anspruch 4, wobei der exzentrische Abschnitt (13) einen kreisförmigen Querschnitt aufweist.

6. Herausziehbarer Leistungsschalter (3) nach einem der vorhergehenden Ansprüche, wobei jedes der Räder (7) ein Durchgangsloch (18) aufweist, das eine Innenwand (15) definiert, wobei der exzentrische Abschnitt (13) des Stifts innen in die Radinnenwand (15) eingreift.

7. Herausziehbarer Leistungsschalter (3) nach einem der vorhergehenden Ansprüche, wobei die Drehachsen (R) der Räder (7) senkrecht zur Verbindungs-/Trennrichtung (CD) sind.

8. Herausziehbarer Leistungsschalter (3) nach einem der vorhergehenden Ansprüche, wobei die Drehachsenachsen (R) der Räder (7) parallel zueinander sind.

9. Herausziehbarer Leistungsschalter (3) nach einem der vorhergehenden Ansprüche, ferner umfassend einen Rollenschlitten (4), der den Leistungsschalter (3) trägt, wobei die Räder (7) mit dem Rollenschlitten (4) gekoppelt sind.

## Revendications

1. Disjoncteur amovible (3) comprenant une pluralité de roues (7) afin de pouvoir être déplacé le long d'une direction de connexion/déconnexion (CD) par rapport à un appareillage de commutation (5) entre une position de connexion, le disjoncteur (3) étant connecté électriquement et mécaniquement à l'appareillage de commutation (5), et une position de déconnexion, le disjoncteur (3) et l'appareillage de commutation (5) étant déconnectés électriquementet mécaniquement, chaque roue (7) pouvant être mise en rotation le long d'un axe de rotation (R) qui est transversal à la direction de connexion/déconnexion (CD), comprenant en outre un système pour déplacer l'axe de rotation (R) de chacune desdites roues (7), ledit système comprenant une pluralité de broches (8), chacune insérée dans un siège de broches correspondant (9) du disjoncteur (3), chacune desdites broches (8) s'étendant le long d'un axe de broches (P) et pouvant être mise en rotation dans le siège de broches correspondant (9) autour de celui-ci, chacune desdites broches (8) comprenant en outre une partie excentrique (13) qui est excentrique par rapport à l'axe de broche (P), chacune desdites roues (7) comprenant une partie de prise (14) mise en prise avec ladite partie excentrique (13) qui agit comme une came dans ladite partie d'engagement (14),chacune desdites broches (8) comprenant une partie d'actionnement (17) permettant des rotations de la broche (8) au moyen d'un outil externe, **caractérisé en ce que** chacune desdites broches (8) a une partie filetée (10) opposée à la partie d'actionnement (17) vissée dans un siège fileté (11) d'un contre-écrou (12), la partie excentrique de l'axe (13) agissant comme une contrainte axiale pour la roue (7), formant une butée pour une paroi radialement interne (16) de la roue (7).

2. Disjoncteur amovible (3) selon la revendication 1, dans lequel ledit système est conçu de telle sorte que les axes de rotation (R) des roues (7) peuvent être déplacés indépendamment l'un de l'autre.

3. Disjoncteur amovible (3) selon la revendication 1 ou 2, dans lequel ledit système est conçu de telle sorte que chaque axe de rotation (R) de roue (7) est déplacé transversalement par rapport à la direction de connexion/déconnexion (CD) tout en conservant la même orientation relativement à ce dernier.

4. Disjoncteur amovible (3) selon l'une quelconque des revendications précédentes, dans lequel la partie excentrique (13) s'étend le long d'un axe de partie excentrique (E) qui est parallèle à l'axe de broche et décalé par rapport à l'axe de broche (P).

5. Disjoncteur amovible (3) selon la revendication 4, dans lequel la partie excentrique (13) a une section circulaire.

6. Disjoncteur amovible (3) selon l'une quelconque des revendications précédentes, dans lequel chacune desdites roues (7) a un trou traversant (18) définissant une paroi intérieure (15), dans lequel ladite partie excentrique de broche (13) est mise en prise intérieurement avec ladite paroi intérieure de roue (15).

7. Disjoncteur amovible (3) selon l'une quelconque des revendications précédentes, dans lequel les axes de rotation (R) de roues (7) sont perpendiculaires à la direction de connexion/déconnexion (CD).

8. Disjoncteur amovible (3) selon l'une quelconque des revendications précédentes, dans lequel les axes de rotation (R) de roues (7) sont parallèles entre eux.

9. Disjoncteur amovible (3) selon l'une quelconque des revendications précédentes, comprenant en outre un chariot (4) supportant le disjoncteur (3), dans lequel les roues (7) sont accouplées au chariot (4).
